# EUROPEAN PATENT SPECIFICATION

(11) **EP 3 243 730 B1**
(45) Date of publication and mention of the grant of the patent: **20.03.2019**
(21) Application number: 16425042.5
(22) Date of filing: 11.05.2016
(51) Int. Cl.: B62D 25/10, B62D 25/12, B62D 29/00, B60J 5/04, B60J 5/10

(54) **MOTOR VEHICLE BODY PANEL AND MANUFACTURING PROCESS FOR PRODUCING SUCH A BODY PANEL**
KRAFTFAHRZEUGKAROSSERIEBLECH UND HERSTELLUNGSVERFAHREN ZUR HERSTELLUNG VON EINEM SOLCHEN KARROSSERIEBLECH
PANNEAU DE CARROSSERIE DE VÉHICULE AUTOMOBILE ET PROCÉDÉ DE FABRICATION POUR LA PRODUCTION D'UN TEL PANNEAU DE CARROSSERIE

(43) Date of publication of application: 15.11.2017
(73) Proprietor: FCA Italy S.p.A., 10135 Torino (IT)
(72) Inventor: Tribolo, Fabrizio, 10135 Torino (IT); Rosa, Mario, 10135 Torino (IT); Pignata, Eraldo, 10135 Torino (IT); Basiletti, Sonia, 10135 Torino (IT); Menzato, Giorgio, 10135 Torino (IT)
(74) Representative: Lovino, Paolo

(56) References cited:
- JP-A- 2009 126 481
- US-A1- 2015 375 796

## Description

The present invention relates to a motor vehicle body panel, in particular a bonnet.

In the automotive market, engine bonnets usually have a metal support frame facing towards the engine compartment and a skin panel formed by a shaped metal sheet and defining the external profile of the motor vehicle. This sheet is rigidly fixed to the frame, in particular by means of crimping, gluing and/or welding. Both the frame and the panel are typically made of steel or aluminium.

In particular, the frame has a perimetric connecting tab which, prior to crimping, is supported by and glued onto the inner surface of the panel, by means of a structural adhesive. After this gluing, the panel has a perimetric protruding tab, which is folded onto itself so as to form a connection, in order to avoid sharp edges along the peripheral edge of the bonnet, and in such a way as to clamp the perimetric tab of the frame.

Subsequently, a second adhesive, typically a so-called "external sealant", having lesser adhesive properties than those of the first adhesive is applied onto the end edge of the folded tab, so as to improve adhesion and protect from corrosion in connection with the crimping zone.

After these fixing operations, the component is subjected to cataphoresis and painting processes, which are characterised by relatively high temperatures.

For example, document US2015375796 discloses a vehicle structure comprising a pair of panels with different expansion coefficients and an adhesive layer formed between the edges of the panels to join the latter. Alternatively, in document JP2009126481 joining is obtained by laser brazing.

There is a need to reduce the weight with respect to the known solutions described above, by using a frame made of plastic material and, therefore, by producing a bonnet of hybrid plastic-metal material. It is preferable, again for the purpose of weight reduction, to use an external panel made of aluminium alloy, instead of steel.

If, however, these materials are used, the fastening and production techniques described above may not be used unaltered, since the two materials of the hybrid component have very different coefficients of thermal expansion which can give rise to unwanted and uncontrollable deformation phenomena due to the high temperatures experienced during cataphoresis and painting processes.

In particular, in connection with the crimping region, adhesives prevent relative movements between the frame and the panel, for which the different expansions of the two materials tend to deform the shape of the bonnet compared to what is envisaged in the design stage.

There is also the need to improve the known solutions described above from the aesthetic point of view, since the second adhesive used to cover the crimping region establishes a seam that not only remains visible along the peripheral edge of the bonnet, but also conspicuously protrudes from the inside.

The objective of the present invention is to provide a motor vehicle body panel which makes it possible to meet the above requirements in a simple and inexpensive manner.

According to the present invention a motor vehicle body panel is provided as defined in claim 1.

The present invention also relates to a process for producing a motor vehicle body panel.

According to the present invention, a process for producing a motor vehicle body panel is thus provided as defined in claim 8.

The invention will now be described with reference to the accompanying drawings which illustrate a non limiting embodiment example, wherein:
- Figure 1 is a perspective view of a preferred embodiment of a motor vehicle body panel in accordance with the teachings of the present invention, with the two components of the body panel shown in exploded view; and
- Figure 2 shows, in cross-section and in enlarged scale, an outside edge of the body panel of figure 1, with the two components fixed to each other.

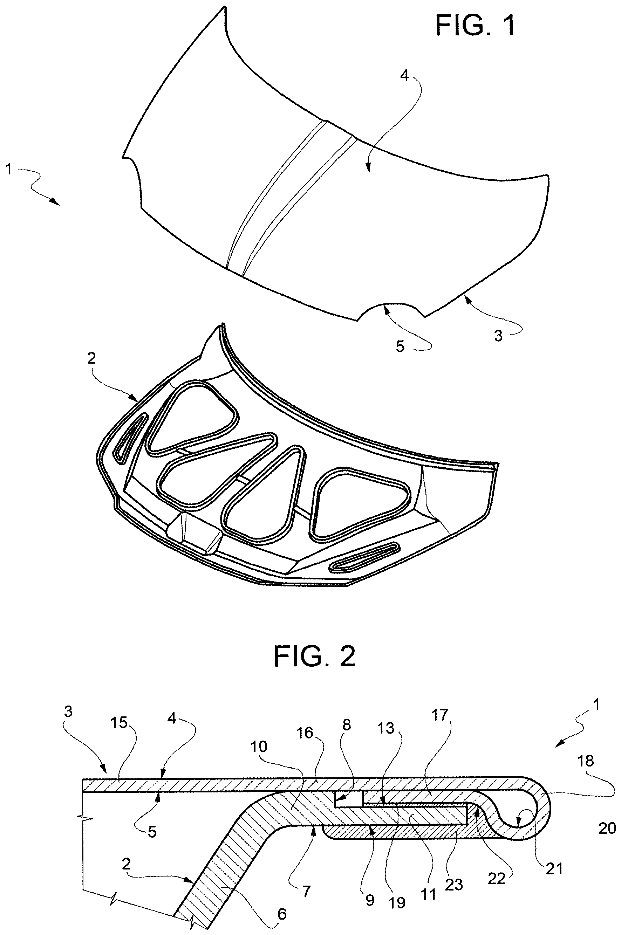

In Figure 1, the reference number 1 indicates as a whole a motor vehicle body panel as defined in particular by a bonnet (shown partially and in exploded view), configured so as to be rotatable with respect to a supporting structure and therefore able to open/close the engine compartment of a motor vehicle (not shown).

The bonnet 1 comprises: a supporting frame 2, made of plastic material, preferably a polyamide-based material (for example PA66-GF35); and a skin panel 3, which is defined by a shaped metal sheet, preferably a sheet made from an aluminium alloy (for example A16016-T4), and has an outer face 4 and an inner face 5, opposite to the face 4, and is fixed to the frame 2 according to the method shown in figure 2 and described below.

The frame 2 is arranged on the side of the face 5 and comprises an intermediate portion 6 and a perimetric tab 7, which is bounded by a surface 8 and a surface 9 opposite to each other. The tab 7, in turn, comprises two portions 10 and 11, of which the portion 10 is directly connected to the portion 6 and, in particular, rests against the face 5 of the panel 3, while portion 11 defines the end edge of the frame 2. The portion 11 has a smaller thickness than the portion 10 (the thickness being measured at right angles to the surface 9), for which the surface 8 has a step and defines a recess or seat 13 in connection with the portion 11. The difference in thickness between the portions 10 and 11 is slightly greater than the thickness of the panel 3, as will be shown in detail below. The thickness of the panel 3 is, for example, equal to 0.8 mm.

The panel 3 comprises: an intermediate portion 15 facing portion 6; a shoulder portion 16, arranged around the portion 15; and a folded-over perimetric tab 17, which is joined to the end of the portion 16 by a connecting portion 18, parallel to and resting on the portion 16 and engaging with the seat 13 defined by the portion 11. In particular, the tab 17 is fixed to the surface 8 in connection with the portion 11 by means of a layer of glue 19: the difference in thickness between the portions 10 and 11 is established at the design stage so as to be equal to the sum of the thicknesses of the tab 17 and the layer 19.

Preferably, the area in which the tab 17 and the portion 11 overlap and in which the layer 19 is applied has a width at least equal to 6 mm, measured along a direction 20 orthogonal to the end edges of the tabs 7 and 17.

As can be seen in figure 2, the connecting portion 18 defines a sort of curl or teardrop. The radius of curvature of the connecting portion 18 is in fact relatively large and is greater than the thickness of the panel 2, since the connecting portion 18 defines an empty internal channel 21, which extends along the entire perimeter of the bonnet 1 and, in particular, has a teardrop-shaped cross section. At the same time, the face 4 is tangent to the external surface of the connecting portion 18. Therefore, the connecting portion 18 projects with respect to the tab 17.

The outer diameter of the connecting portion 18 is preferably greater than the distance between the surface 9 and face 4, for which the connecting portion 18 also protrudes rearwards with respect to the surface 9.

The outer surface of the connecting portion 18 and the end edge of the tab 7 define between them a recess 22, which is filled by a seam of sealant 23, in particular a so-called "external sealant".

The seam 23 also covers at least a portion of the surface 9. The seam 23 preferably entirely covers the portion 11.

The amount of sealant material in the layer 23 is calibrated in such a way as not to protrude rearwards beyond the connecting portion 18. In particular, the outer surface of the seam 23 is flush with the outer convex surface of the connecting portion 18, if the hood 1 is viewed laterally along the direction 20. Thanks to the connecting portion 18 which masks the seam 23, the latter does not alter the aesthetic value of the bonnet 1.

In order to produce the bonnet 1 during the manufacturing process, the shape of the portion 15 is achieved by pressing techniques of known type. After the pressing of the panel 3, the tab 17 extends in the extension of the portion 16 and must then be subjected to a bending or folding operation so as to form the teardrop-shaped connecting portion 18. The size of the radius of curvature is established both on the basis of stylistic requirements relating to the aesthetics of the outside edge of the bonnet 1, as well as on the basis of the requirement to fully mask the seam 23.

According to one aspect of the present invention the panel 3 is subjected to cataphoresis operations and optional subsequent painting before mating with the frame 2.

Beneficially, the panel 3 is subjected to such painting operations after having folded the tab 17.

Threaded metal elements and/or reinforcing metal elements are inserted and/or co-moulded into the frame 2 to provide attachment points for the subsequent coupling of hinge elements and the catch striker plate.

Subsequently, the frame 2 is coupled to the panel 3 by inserting the tab 17 into the seat 13, by resting the portion 10 on the portion 16 and, at the same time, by fixing the portion 11 to the tab 17 by means of the layer 19. During these operations, the positioning of the tab 17 in the seat 13 makes it possible to provide a centring reference between the frame 2 and the panel 3.

After fixing, the seam 23 is applied so as to fill in the recess 22, to ensure the best sealing properties between the frame 2 and the panel 3 and anti-corrosion properties in the recess 22.

From the foregoing the benefits accruing from the characteristics of the bonnet 1 and of its manufacturing process become clear. In particular, the coupling system does not provide a true and proper crimping of the edge of the panel 3 on the frame 2, since the tab 7 remains external to the tab 17, while the latter is arranged between the portions 16 and 11. In this way it is possible to subject the panel 3 to the cataphoresis operations separately from the structure 2, i.e. before the two components are fixed to one another. In this way, the two components are not subjected to high temperatures and therefore to different thermal expansions after they have been coupled ed and already form the bonnet 1. It follows that the bonnet 1, while consisting of hybrid metal-plastic materials, has no imperfections due to differences in thermal expansion coefficients between the two materials of the frame 2 and the panel 3.

In addition, the final product has an aesthetically pleasing and well finished appearance. This result is also achieved thanks to the shape and sizing of the connecting portion 18, as indicated above in detail.

Finally, it is evident from the foregoing that the bonnet 1 and its manufacturing process described, with reference to the accompanying figures, may be subject to modifications and variants which do not depart from the protective scope of the present invention as defined in the claims below.

In particular, the frame 2 may not be subjected to painting, and could potentially consist of a body-tinted plastic; and/or the portion 10 of the tab 7 may be spaced from the face 5 and/or could also be glued to the panel 3.

Finally, the present invention may find application in body panels different from the bonnet 1, for example for a boot lid or a side door.

## Claims

1. Motor vehicle body panel (1), comprising:
- a supporting frame (2) comprising a first perimetric tab (7);
- a skin panel (3) made of a metal material, fixed to said supporting frame (2) and comprising a shoulder portion (16) and a second perimetric tab (17), which is folded over with respect to said shoulder portion (16), is joined to said shoulder portion (16) via a connecting portion (18) and is parallel to said shoulder portion (16) ;
- at least one adhesive layer (19) which fixes said first and second perimetric tabs (7,17) to one another;
said supporting frame (2) being made of a plastic material, and said second perimetric tab (17) being arranged between said shoulder portion (16) and said first perimetric tab (7) ;
**characterised in that** said first perimetric tab comprises a first and a second portion (10,11); said second portion (11) defining an end edge of said supporting frame (2) and having a smaller thickness than the thickness of said first portion (11) in such a way as to form a seat (13) engaged by said second perimetric tab (17).

2. Body panel according to claim 1, **characterised in that** said first portion (10) rests against said shoulder portion (16).

3. Body panel according to claim 1 or 2, **characterised in that** said second portion (11) is glued to said second perimetric tab (17) by means of said adhesive layer (19).

4. Body panel according to any one of the preceding claims, **characterised in that** said shoulder portion (16) has an outer face (4) which is tangent to a convex outer surface of said connecting portion (18); and **in that** said convex outer surface has a radius that is greater than the thickness of said skin panel (3).

5. Body panel according to claim 4, **characterised in that** said convex outer surface has a diameter that is greater than or equal to the distance between said outer face (4) and an opposite surface (9) of said first perimetric tab (7),

6. Body panel according to claim 4 or 5, **characterised in that** said first perimetric tab (7) and said connecting portion (18) define therebetween a recess (22) filled with a seam of a further adhesive (23).

7. Body panel according to claim 6, **characterised in that** said seam (23) is flush with said convex outer surface, from a side view.

8. Manufacturing process for producing a motor vehicle body panel according to any one of the preceding claims, the process comprising:
- at least one cataphoresis and/or painting step, performed on said skin panel (3);
- a fixing step, wherein said skin panel (3) and said supporting frame (2) are coupled to one another;
**characterised in that** said cataphoresis and/or painting step is performed before said fixing step.

## Patentansprüche

1. Kraftfahrzeugkarosserieblech (1), umfassend:
- einen Tragrahmen (2), der eine erste perimetrische Lasche (7) umfasst;
- ein Außenhautteil (3), hergestellt aus einem Metallmaterial, das an dem Tragrahmen (2) befestigt ist und einen Schulterabschnitt (16) und eine zweite perimetrische Lasche (17) umfasst, die in Bezug auf den Schulterabschnitt (16) umgefaltet ist, mit dem Schulterabschnitt (16) über einen Verbindungsabschnitt (18) verbunden ist und parallel zu dem Schulterabschnitt (16) ist;
- mindestens eine Haftschicht (19), die die erste und die zweite perimetrische Lasche (7, 17) aneinander befestigt;
wobei der Tragrahmen (2) aus einem Kunststoffmaterial hergestellt ist und die zweite perimetrische Lasche (17) zwischen dem Schulterabschnitt (16) und der ersten perimetrischen Lasche (7) angeordnet ist;
**dadurch gekennzeichnet, dass** die erste perimetrische Lasche einen ersten und einen zweiten Abschnitt (10, 11) umfasst; wobei der zweite Abschnitt (11) eine Endkante des Tragrahmens (2) definiert und eine geringere Dicke als die Dicke des ersten Abschnitts (11) aufweist, sodass auf diese Weise ein Sitz (13) gebildet wird, der durch die zweite perimetrische Lasche (17) in Eingriff genommen wird.

2. Karosserieblech nach Anspruch 1, **dadurch gekennzeichnet, dass** der erste Abschnitt (10) an dem Schulterabschnitt (16) anliegt.

3. Karosserieblech nach Anspruch 1 oder 2, **dadurch gekennzeichnet, dass** der zweite Abschnitt (11) mittels der Haftschicht (19) mit der zweiten perimetrischen Lasche (17) verklebt ist.

4. Karosserieblech nach einem der vorhergehenden Ansprüche, **dadurch gekennzeichnet, dass** der Schulterabschnitt (16) eine Außenfläche (4) aufweist, die zu einer konvexen Außenfläche des Verbindungsabschnitts (18) tangential ist; und dadurch, dass die konvexe Außenfläche einen Radius aufweist, der größer als die Dicke des Außenhautteils (3) ist.

5. Karosserieblech nach Anspruch 4, **dadurch gekennzeichnet, dass** die konvexe Außenfläche einen Durchmesser aufweist, der größer als oder gleich dem Abstand zwischen der Außenfläche (4) und einer gegenüberliegenden Fläche (9) der ersten perimetrischen Lasche (7) ist.

6. Karosserieblech nach Anspruch 4 oder 5, **dadurch gekennzeichnet, dass** die erste perimetrische Lasche (7) und der Verbindungsabschnitt (18) zwischen sich eine Ausnehmung (22) definieren, die mit einer Naht eines weiteren Klebstoffs (23) gefüllt ist.

7. Karosserieblech nach Anspruch 6, **dadurch gekennzeichnet, dass** die Naht (23), aus einer Seitenansicht, bündig mit der konvexen Außenfläche ist.

8. Fertigungsverfahren zur Herstellung eines Kraftfahrzeugkarosserieblechs nach einem der vorhergehenden Ansprüche, das Verfahren umfassend:
- mindestens einen Elektrophorese- und/oder Lackierschritt, der an dem Außenhautteil (3) durchgeführt wird;
- einen Befestigungsschritt, wobei das Außenhautteil (3) und der Tragrahmen (2) miteinander verbunden werden;
**dadurch gekennzeichnet, dass** der Elektrophorese- und/oder Lackierschritt vor dem Befestigungsschritt durchgeführt wird.

## Revendications

1. Panneau de carrosserie de véhicule motorisé (1), comprenant :
- un châssis de support (2) comprenant une première patte périmétrique (7) ;
- un panneau de revêtement (3) réalisé en un matériau métallique, fixé audit châssis de support (2) et comprenant une portion d'épaulement (16) et une seconde patte périmétrique (17), qui est repliée par rapport à ladite portion d'épaulement (16), est assemblée à ladite portion d'épaulement (16) via une portion de raccordement (18) et est parallèle à ladite portion d'épaulement (16) ;
- au moins une couche d'adhésif (19) qui fixe lesdites première et seconde pattes périmétriques (7, 17) l'une à l'autre ;
ledit châssis de support (2) étant réalisé en un matériau plastique, et ladite seconde patte périmétrique (17) étant agencée entre ladite portion d'épaulement (16) et ladite première patte périmétrique (7) ;
**caractérisé en ce que** ladite première patte périmétrique comprend une première et une seconde portion (10, 11) ; ladite seconde portion (11) définissant un bord d'extrémité dudit châssis de support (2) et ayant une épaisseur inférieure à l'épaisseur de ladite première portion (11) de manière à former une assise (13) enclenchée par ladite seconde patte périmétrique (17).

2. Panneau de carrosserie selon la revendication 1, **caractérisé en ce que** ladite première portion (10) s'appuie contre ladite portion d'épaulement (16).

3. Panneau de carrosserie selon la revendication 1 ou 2, **caractérisé en ce que** ladite seconde portion (11) est collée à ladite seconde patte périmétrique (17) au moyen de ladite couche d'adhésif (19).

4. Panneau de carrosserie selon l'une quelconque des revendications précédentes, **caractérisé en ce que** ladite portion d'épaulement (16) a une face extérieure (4) qui est tangente à une surface extérieure convexe de ladite portion de raccordement (18) ; et **en ce que** ladite surface extérieure convexe a un rayon qui est supérieur à l'épaisseur dudit panneau de revêtement (3).

5. Panneau de carrosserie selon la revendication 4, **caractérisé en ce que** ladite surface extérieure convexe a un diamètre qui est supérieur ou égal à la distance entre ladite face extérieure (4) et une surface opposée (9) de ladite première patte périmétrique (7).

6. Panneau de carrosserie selon la revendication 4 ou 5, **caractérisé en ce que** ladite première patte périmétrique (7) et ladite portion de raccordement (18) définissent entre elles un évidement (22) rempli d'un joint d'un adhésif supplémentaire (23).

7. Panneau de carrosserie selon la revendication 6, **caractérisé en ce que** ledit joint (23) est aligné avec ladite surface extérieure convexe, depuis une vue de profil.

8. Procédé de fabrication pour produire un panneau de carrosserie de véhicule motorisé selon l'une quelconque des revendications précédentes, le procédé comprenant :
- au moins une étape de cataphorèse et/ou de peinture, réalisée sur ledit panneau de revêtement (3) ;
- une étape de fixation, dans laquelle ledit panneau de revêtement (3) et ledit châssis de support (2) sont accouplés l'un à l'autre ;
**caractérisé en ce que** ladite étape de cataphorèse et/ou de peinture est réalisée avant ladite étape de fixation.
